# EUROPEAN PATENT SPECIFICATION

(11) **EP 4 144 669 B1**
(45) Date of publication and mention of the grant of the patent: **04.03.2026**
(21) Application number: 21195243.7
(22) Date of filing: 07.09.2021
(51) Int. Cl.: B65G 1/04, B65G 1/137, B65G 11/06

(54) **SYSTEM AND METHOD FOR GRAVITATIONAL UNLOADING OF ITEMS FROM A CONTAINER**
SYSTEM UND VERFAHREN ZUR SCHWERKRAFTENTLADUNG VON GEGENSTÄNDEN AUS EINEM BEHÄLTER
SYSTÈME ET PROCÉDÉ DE DÉCHARGEMENT GRAVITATIONNEL D'ARTICLES À PARTIR D'UN RÉCIPIENT

(43) Date of publication of application: 08.03.2023
(60) Divisional application: 24220896.5
(73) Proprietor: Autostore Technology AS, 5578 Nedre Vats (NO)
(72) Inventor: WILHELM, Benjamin, 75417 MÜHLACKER (DE)
(74) Representative: Kilburn & Strode LLP

(56) References cited:
- EP-A1- 3 782 932
- WO-A1-2019/238642
- IT-A1- 201900 004 129
- NO-A1- 20 160 614
- US-A1- 2020 071 093
- US-A1- 2021 024 299
- US-B1- 10 807 806

## Description

### FIELD OF THE INVENTION

The present invention relates to an automated storage and retrieval system for storage and retrieval of containers, in particular to a system and method for using gravity for unloading items from a container.

### BACKGROUND AND PRIOR ART

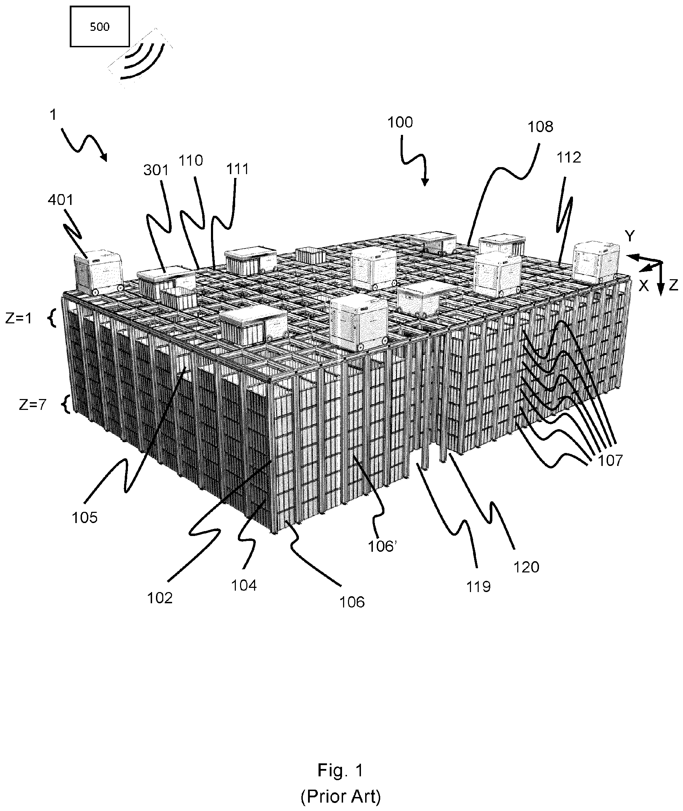

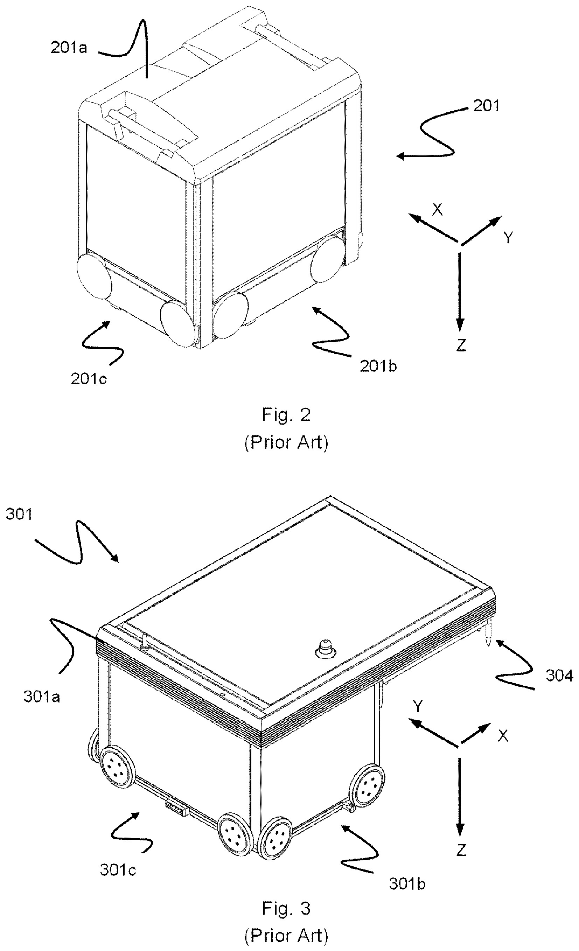

Fig. 1 discloses a typical prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction *X* across the top of the frame structure 100, and a second set of parallel rails 111 arranged perpendicular to the first set of rails 110 to guide movement of the container handling vehicles 201,301,401 in a second direction *Y* which is perpendicular to the first direction *X.* Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201,301,401 comprises a vehicle body 201a,301a,401a and first and second sets of wheels 201b,301b,201c,301c,401b,401c which enable the lateral movement of the container handling vehicles 201,301,401 in the *X* direction and in the *Y* direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b,301b,201c,301c,401b,401c can be lifted and lowered, so that the first set of wheels 201b,301b,401b and/or the second set of wheels 201c,301c,401c can be engaged with the respective set of rails 110, 111 at any one time.

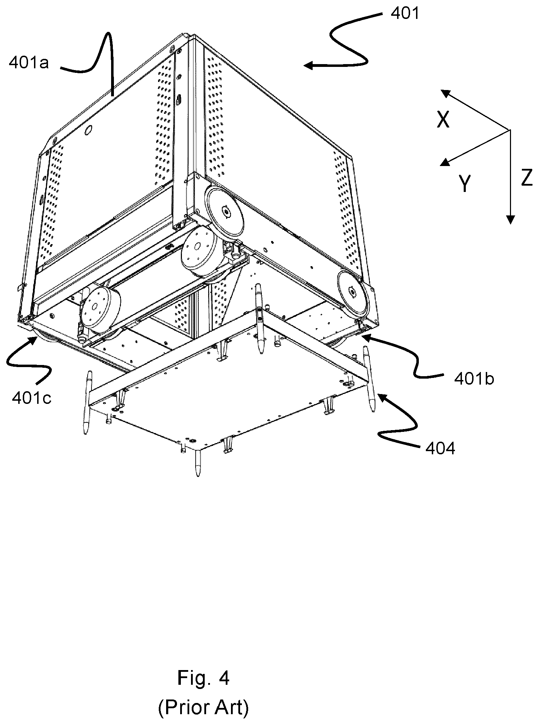

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y*. Parts of the gripping device of the container handling vehicles 301,401 are shown in Figs. 3 and 4 indicated with reference number 304,404. The gripping device of the container handling device 201 is located within the vehicle body 201a in Fig. 2.

Conventionally, and also for the purpose of this application, *Z*=1 identifies the uppermost layer of storage containers, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1.*..n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=10, *Y*=2, *Z*=3. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the *X*-, *Y*- and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a as shown in Fig. 2 and 4 and as described in e.g. WO2015/193278A1 and WO2019/206487A1,.

Fig. 3 shows an alternative configuration of a container handling vehicle 301 with a cantilever construction. Such a vehicle is described in detail in e.g. NO317366, the.

The cavity container handling vehicles 201 shown in Fig. 2 may have a footprint that covers an area with dimensions in the X and Y directions which is generally equal to the lateral extent of a storage column 105, e.g. as is described in WO2015/193278A1,. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018/146304A1, illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106; and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

WO2019238642A1, which the EPO appears to have identified as the 'closest prior art', describes, according to its abstract, an unloading arrangement, an unloading station, and a method of unloading an item from a storage container, comprising: a delivery vehicle; a storage container carried by the delivery vehicle; and an unloading station for unloading an item from the storage container while it is being carried by the delivery vehicle in an automatic storage and retrieval system, the unloading station comprising: an unloading device; and a destination conveyor configured to convey the item to a target destination, wherein the unloading device is configured to move the item through a side opening of the storage container to the destination conveyor.

Unloading the content of a container can be a time-consuming. The right container has to be brought to a picking station and a person or a picking robot has to pick the right item and the right amount of items, if the order is for a plurality of different items the picker or the picking robot has to wait for the next container with the next item on the list.

This solution is not favorable if the list of ordered items needs to be picked quick. Further, if a lot of orders needs to be picked fast, like e.g. in a grocery shopping situation.

If you for instance needs to pick 100 shopping list in a reasonable time, the shop would need a lot of pickers to be able to cope with the task. This again will lead to the shop having to hire a large staff just to handle the picking of the items. This again will be costly and result in the price for shopping going up.

It is therefore a need for a solution that allows for the picking of items from containers stored in a storage and retrieval system.

### SUMMARY OF THE INVENTION

The present invention is set forth and characterized in the independent claims, while the dependent claims describe other characteristics of the invention.

The invention is related to a system for unloading a container of its content, comprising an automated storage and retrieval system, wherein the system comprises a rail system comprising a first set of parallel rails arranged to guide movement of a container handling vehicle in a first direction (X) across the top of a framework structure, and a second set of parallel rails arranged perpendicular to the first set of rails to guide movement of the container handling vehicle in a second direction (Y) which is perpendicular to the first direction (X), the first and second sets of parallel rails dividing the rail system into a plurality of grid cells, the framework structure comprises upright members and horizontal members, at least one container handling vehicle configured to operate on the rail system, wherein the at least one container handling vehicle is provided with at least one orientation sensor configured to measure at least one orientation parameter of the sensor in a three-dimensional cartesian reference system, a central control unit configured to receive, transmit and process data signals of the container handling vehicle and to receive and process data signals of the sensor, at least one container comprised of four side walls and a bottom creating an open box structure, means for transporting the container to an unloading station where the content of the container is emptied by gravity wherein that the unloading station comprises a container tipping device that tips the container around at least one axis, emptying the content. The container rotating device comprises a guide surface which guides the container along a helical path.

In addition, the guide surface may have an opening for allowing the content of the container to empty.

The container rotating device can comprise a set of rails which may define a path for the container and can guide it as it travels through the unloading station and may be configured to turn the container at least partially around said axis.

In examples useful for understanding the present invention, the container rotating device can comprise a mechanical arm, or the container rotating device can comprise a set of wheels pushed up against the container and said wheels rotate, turning the container around where the set of wheels can be biased towards the container by springs to allow the wheels to follow the side walls of the container.

The means for transporting the container to the unloading station can comprise a conveyor belt, chains with hooks, rollers, roller balls or a gravity driven system.

The container itself can be made up of several compartments, wherein each compartment of the container can have its own lid and each lid can be individually unlocked allowing only the content of a compartment with an unlocked lid to be emptied.

In a second aspect, the invention concerns a method for unloading a container of its content, comprising at least one container comprised of four side walls and a bottom creating an open box structure, means for transporting the container to an unloading station where the content of the container can be emptied by gravity: collecting a container from a storage and retrieval system, transporting the container to the unloading station using a means for transportation, tipping the container at least partially around at least one axis allowing the content to be unloaded, turning the container the right way up, transporting the container back to a storage and retrieval system, transporting the container to the unloading station using a conveyor belt, chains with hooks, rollers, roller balls or a gravity driven system.

In an alternative solution the lids can be part of the unloading station. In the unloading station there can be a lid for any compartment combination a container might have. The compartment combination in a specific container can be registered together with the ID of the container. When the container enters the unloading station the central computer system opens the correct lid(s) and the content of that compartment is unloaded.

In yet another embodiment of the invention the lids can be in the cradle the container is placed in when it enters the unloading station. the cradle can open whatever lids is necessary to unload the correct content into a collecting station.

In an alternative solution the container can be pushed through the unloading system by the containers entering after it. When a container enters the unloading system a pusher gives the container an initial push. The push propels the container and every container in front one position forward by every container pushing on the container in front. When the container has passed through the unloading system the container is transported back into the grid or it can be sent for refilling.

By using these solutions to solve the problems with the cost and speed of picking from containers stored in a storage and retrieval system.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view from underneath of a central cavity container handling vehicle where a lifting platform for handling containers are visible.
Fig. 5a and 5b is a perspective view of an embodiment of the present invention wherein a helix screw enclosed in a box shape wherein one of the containers enters one side and are turned around by the helix screw allowing the contents to be poured from the container into a collecting station.
Fig. 6 is an alternative embodiment of the present invention where a framework of rails guides the container and allows it to be turned around and the content of the container being emptied into a collecting station.
Fig. 7 is an example useful for understanding the present invention wherein a set of biased wheels press against the sides of the container spinning the container around allowing the items in the container to empty into a collecting station.

### DETAILED DESCRIPTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3, i.e. a number of upright members 102 and a number of horizontal members 103, which are supported by the upright members 102, and further that the framework structure 100 comprises a first, upper rail system 108 in the X direction and Y direction.

The framework structure 100 further comprises storage compartments in the form of storage columns 105 provided between the members 102, 103, where storage containers 106 are stackable in stacks 107 within the storage columns 105.

The framework structure 100 can be of any size. In particular it is understood that the framework structure can be considerably wider and/or longer and/or deeper than disclosed in Fig. 1. For example, the framework structure 100 may have a horizontal extent of more than 700x700 columns and a storage depth of more than twelve containers.

Fig. 4 is a perspective view from underneath of a central cavity container handling vehicle where a lifting platform for handling containers are visible.

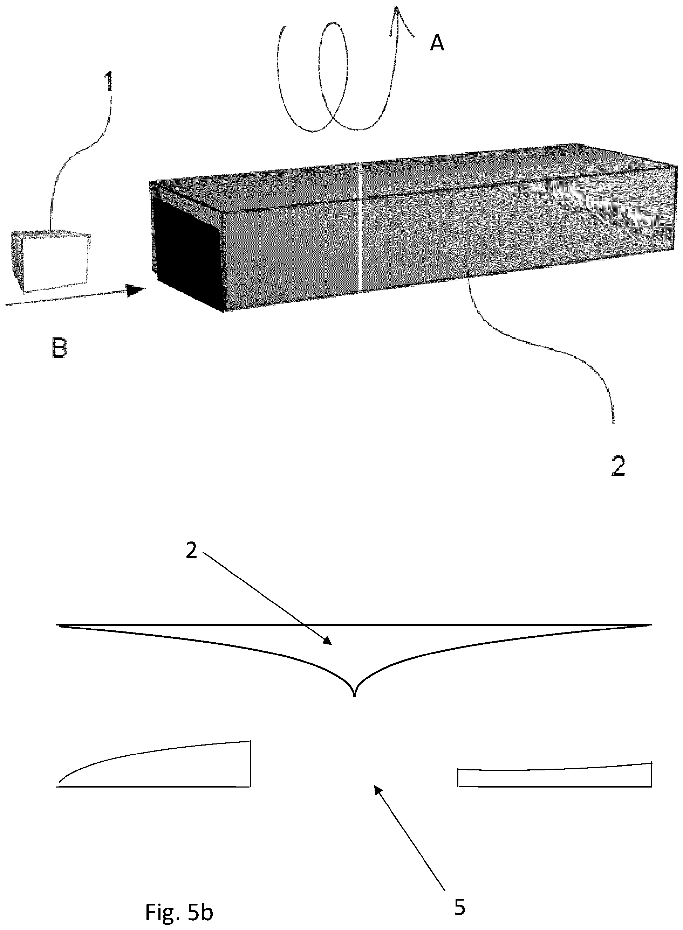

Fig. 5a and 5b is a perspective view of an embodiment of the present invention wherein a helix screw enclosed in a box shape wherein one of the containers enters one side and are turned around by the helix screw allowing the contents to be poured from the container into a collecting station.

The box shape has an opening in either end in the form of a tunnel running through the box for guiding the container. The tunnel has a shape that is similar to the shape of a container. The container can be propelled through the tunnel by gravity working on the box. In this scenario the box is at an incline falling controlled through the tunnel in the box. Alternatively, the box can be propelled through the tunnel by a propelling mechanism This propelling mechanism can be either rollers, roller balls, conveyor belts, chains and hooks, or any other type of propelling solution that will allow a container to move through a tunnel.

In an alternative solution the container can be pushed through the unloading system by the containers entering after it. When a container enters the unloading system a pusher gives the container an initial push. The push propels the container and every container in front one position forward by every container pushing on the container in front. When the container has passed through the unloading system the container is transported back into the grid or it can be sent for refilling.

The tunnel is twisted in the form of a helix screw. This allows the container to turn as the tunnel turns. The box is enclosed and ensures that the content of the items does not spill out of the container as it moves through the helix screw in the box. However, in order to be able to collect the items in the container, it is essential that the items leave the container at the right time. The box therefore has at least one opening in the side that allows the items in the container to be emptied. The opening in the side of the box is at least smaller than the container itself. The opening can be so large that it allows all the content of the container to be emptied into a collecting station.

Alternatively, the hole in the side of the box can be long allowing the content of the container to be emptied over a longer area. Further there can be more than one hole. If there are more than one hole the at intervals of the holes allow can be spaced apart in such a way that the content of the container can be emptied into several collecting stations.

The helix screw in the box can turn the container around 360 degrees. Alternatively, the screwing motion can turn the box any degree and back again. This would e.g. allow the container to tilt around one axis a certain number of degrees and then back again allowing the container to e.g. not empty its entire content in one go.

Alternatively, the container can be divided into compartments. In this scenario each compartment has one lid. This lid can be closed and opened at the instructions from the central computer system. this would allow the content of only one or more specified compartments to be emptied at a time.

In yet another solution each opening in the side of the box can have a shutter solution that allows a specified amount of the content to be emptied, this shutter solution can be controlled by the central computer system that keeps track of which container is at the collecting station at any one time and also know what items to collect at the collecting station at any one time and what amount of the item to be collected.

When the items that it in the compartments are powders or liquids, or any type of material that cannot be counted, like e.g. powders or liquids, thy can be weighed or measured at the collecting station. The shutter device can ensure that the right amount of powders and liquids are pored from the container.

When unloading bigger items that are not weighed or measured, but are counted, the shutter system can open and close allowing only one item to exit the container at a time. Alternatively, sensors can be placed around the opening of the unloading station counting the number of items that falls out of the container. The sensors in question can be e.g. cameras
The collecting station can be in the form of a container that the items drops into or it can be in the form of a plastic bag or any other form of solution that allows for collecting items.

The collecting station can be boxes on a conveyor belt transporting collected items to a pick-up point.

In figure 5 a the arrow B indicates the traveling direction of the container into the tunnel in the box. The arrow A indicated the shape of the tunnel forming a helix screw through the box.

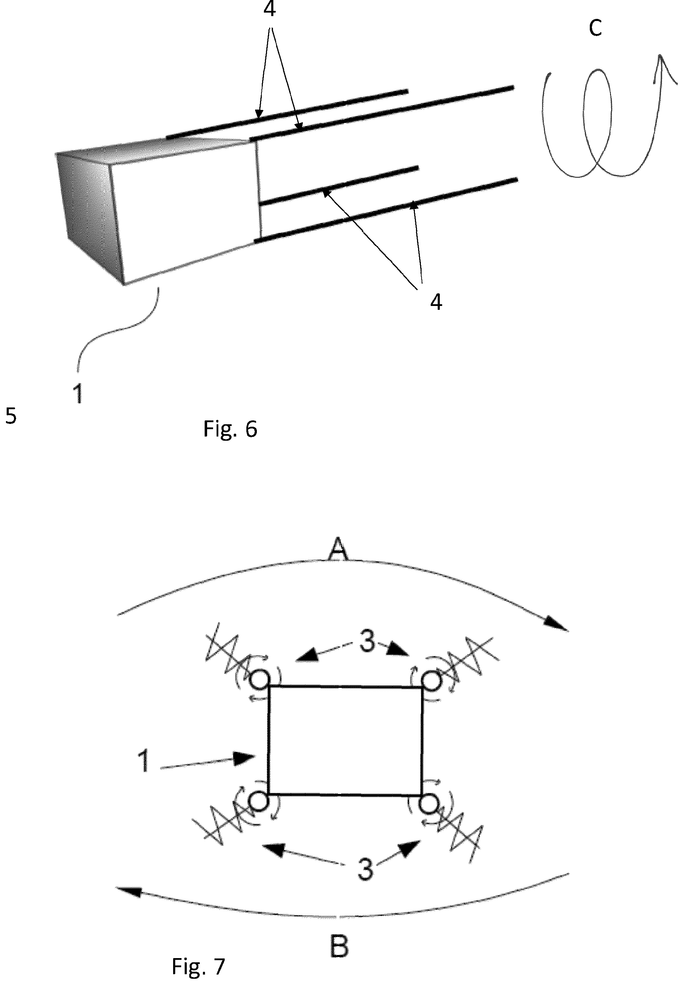

Fig. 6 is an alternative embodiment of the present invention where a framework of rails guides the container and allows it to be turned around and the content of the container being emptied into a collecting station.

The rails guide the container through the system. There can be two or more rails for guiding the container through the system. The container is held in place by the rails and is moved forward through the system by a propelling mechanism. This propelling mechanism can be either rollers, roller balls, conveyor belts, chains and hooks, or any other type of propelling solution that will allow a container to move through the rails.

Alternatively, in examples useful for understanding the present invention, the container can be inverted by a mechanism that grabs hold of the container and turns the container around poring the content out. The container can have different compartments containing different content. The mechanism can therefore have lids that are capable of closing of certain compartments and only pour out the content of specific compartments.

This mechanism can be a robotic arm. The robotic arm can be controlled by the central computer system.

In a two rail solution, the container can be placed in a cradle that is propelled using rollers, roller balls, conveyor belts, chains and hooks or any similar solution. The rails follow a similar helix screw shape. The helix shape of the two rails inverts the container. By inverting the container, the items in the container is emptied out into a collection station.

By using a cradle, it is also possible to use a monorail system. the cradle is attached to the monorail and the container is placed in the cradle. The monorail system transports the cradle with the container through the unloading system, and the container is picked up and transported back into the grid when the system is In a four rail solution, the container can be held in place by the rails and propelled through the unloading system by e.g. a conveyor belt, rollers, roller balls or similar attached to either rail pushing on the container while at the same time propelling the container forward. The helix shape of the four rails allows the container to be inverted as it travels through the rails. The inverting of the container empties the content of the container into a collection station.

The two and four rail solution can be either with or without a cradle. Further there can be two cradles handling the container. There can be one cradle at the top and one cradle at the bottom. The cradle covering the top of the container can have lid(s) that cover the compartments in the container. The lid(s) can be unlocked, uncovering the compartments of interest.

In either of these two solutions the tracks and rails can either rotate the container all the way around or it can rotate the container any number of degrees and then back again. By rotating the container a predetermined degrees and then back again it allows for a better control of the emptying of the container.

Depending on the material inside the container, by rotating the container a predetermined number of degrees this allows for the possibility of controlling the speed of the unloading.

In an alternative embodiment, the container can be divided into compartments. In this scenario each compartment can have one lid. This lid can be closed and opened at the instructions from the central computer system. this would allow the content of only one or more specified compartments to be emptied at a time.

The collecting station can be boxes on a conveyor belt transporting collected items to a pick-up point.

The arrow C indicates how the shape of the rails is capable of rotating the container making it possible to empty the content into a collecting station.

Fig. 7 presents an example useful for understanding the present invention. In this example there are a set of wheels that are biased pressing against the container. When the wheels turn around the same way the container is turned around. By rotating the container around the items stored therein can be emptied from the container.

In this solution the container can be turned any number of degrees depending on how much of the items that needs to be emptied from the container. By inverting the container, all the contents of the container are emptied. However, by rotating the container a predetermined number of degrees it is possible to control the amount of content that is emptied from the container.

The spring function of the biased wheels allows the wheels to follow the contours of the container as it rotates.

The collecting station can be in the form of a container that the items drops into or it can be in the form of a plastic bag or any other form of solution that allows for collecting items.

In an example useful for understanding the present invention, it is also possible to turn the container by using a robotic arm. The robotic arm can be used to turn the container around in order to empty the content of the container in a collecting station.

The collecting station can be boxes on a conveyor belt transporting collected items to a pick-up point.

In the preceding description, various aspects of the delivery vehicle and the automated storage and retrieval system according to the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention as set forth in the appended claims.

### LIST OF REFERENCE NUMBERS

### Prior art (figs 1-4):

- 1: Prior art automated storage and retrieval system
- 100: Framework structure
- 102: Upright members of framework structure
- 103: Horizontal members of framework structure
- 104: Storage grid
- 105: Storage column
- 106: Storage container
- 106': Particular position of storage container
- 107: Stack
- 108: Rail system
- 110: Parallel rails in first direction (X)
- 110a: First rail in first direction (X)
- 110b: Second rail in first direction (X)
- 111: Parallel rail in second direction (Y)
- 111a: First rail of second direction (Y)
- 111b: Second rail of second direction (Y)
- 112: Access opening
- 119: First port column
- 120: Second port column
- 201: Prior art container handling vehicle
- 201a: Vehicle body of the container handling vehicle 201
- 201b: Drive means / wheel arrangement, first direction (X)
- 201c: Drive means / wheel arrangement, second direction (Y)
- 301: Prior art cantilever container handling vehicle
- 301a: Vehicle body of the container handling vehicle 301
- 301b: Drive means in first direction (X)
- 301c: Drive means in second direction (Y)
- 401: Prior art container handling vehicle
- 401a: Vehicle body of the container handling vehicle 401
- 401b: Drive means in first direction (X)
- 401c: Drive means in second direction (Y)
- Y: Second direction
- Z: Third direction
- 1: Container
- 2: Box with a tunnel in a helix screw
- 3: Spring biased wheels.
- 4: Rails
- 5: Opening for unloading the items from the container

## Claims

1. System for unloading a container of its content, comprising an automated storage and retrieval system, wherein the system comprises a rail system (108) comprising a first set of parallel rails (110) arranged to guide movement of a container handling vehicle (201,301,401) in a first direction (X) across the top of a framework structure (100), and a second set of parallel rails (111) arranged perpendicular to the first set of rails to guide movement of the container handling vehicle in a second direction (Y) which is perpendicular to the first direction (X), the first and second sets of parallel rails dividing the rail system into a plurality of grid cells, the framework structure comprises upright members (102) and horizontal members, at least one container handling vehicle configured to operate on the rail system (108), wherein the at least one container handling vehicle (201,301,401) is provided with at least one orientation sensor configured to measure at least one orientation parameter of the sensor in a three-dimensional cartesian reference system, a central control unit configured to receive, transmit and process data signals of the container handling vehicle and to receive and process data signals of the sensor, at least one container (1,106) comprised of four side walls and a bottom creating an open box structure, means for transporting the container to an unloading station for emptying the content of the container by gravity, wherein the unloading station comprises a container rotating device configured to rotate the container around at least one axis, emptying the required amount of content, **characterized in that** the container rotating device comprises a guide surface configured to guide the container along a helical path (A,C).

2. System according to claim 1, wherein the unloading station has an opening (5) for allowing the content of the container (1,106) to empty.

3. System according to any preceding claim, wherein the container rotating device comprises at least one rail (4) which defines a path (C) for the container (1,106) and is configured to guide it as it travels through the unloading station and is configured to turn the container at least partially around said axis

4. System according to any of the claims 1-2, wherein the container rotating device comprise a tube with a tunnel (2) that is configured to guide the container (1,106) through the unloading station and is configured to turn the container at least partially around said axis.

5. System according to any preceding claim, wherein the means for transporting the container (1,106) to the unloading station comprises a conveyor belt, chains with hooks, rollers, roller balls or a gravity driven system or a mechanical arm pushing the container.

6. System according to any preceding claim, wherein the container (1,106) is made up of several compartments.

7. System according to claim 6, wherein each compartment of the container (1,106) has its own lid.

8. System according to claim 6 when dependent on claim 2, wherein each compartment of the container (1,106) can be covered by a lid connected to the opening (5) in the unloading station.

9. System according to claim 6, wherein each compartment of the container (1,106) can be covered by a lid in a cradle.

10. System according to any of the claims 7-9, wherein each lid can be individually unlocked allowing only the content of a compartment with an unlocked lid to be emptied.

11. System according to any of the preceding claims 7-10, wherein the unloading station is fitted with a measuring device allowing it to control a shutter device in the lid(s) controlling the amount of content to be unloaded from the container (1,106).

12. Method for unloading a container (1,106) of its content using the system of any preceding claim, the method comprising:
• collecting the container from an automated storage and retrieval system;
• transporting the container to an unloading station using a means for transportation;
• rotating the container at least partially around at least one axis using a container rotating device of the unloading station, emptying the required amount of content, the container rotating device comprising a guide surface which guides the container along a helical path (A,C);
• turning the container the right way up; and
• transporting the container back to the automated storage and retrieval system.

13. Method according to claim 12, the transporting of the container (1,106) to the unloading station using a conveyor belt, chains with hooks, rollers, roller balls or a gravity driven system.

## Patentansprüche

1. System zum Entladen des Inhalts eines Behälters, umfassend ein automatisiertes Ein- und Auslagersystem, wobei das System ein Schienensystem (108) umfasst, das einen ersten Satz (110) paralleler Schienen umfasst, die zum Führen einer Bewegung eines Behälterhandhabungsfahrzeugs (201, 301, 401) in einer ersten Richtung (X) über die Oberseite einer Rahmenstruktur (100) angeordnet sind, und einen zweiten Satz (111) paralleler Schienen, die senkrecht zu dem ersten Schienensatz angeordnet sind, um eine Bewegung des Behälterhandhabungsfahrzeugs in einer senkrecht zu der ersten Richtung (X) verlaufenden zweiten Richtung (Y) zu führen, wobei der erste und der zweite Satz paralleler Schienen das Schienensystem in eine Vielzahl von Gitterzellen unterteilen, wobei die Rahmenstruktur aufrechte Glieder (102) und horizontale Glieder umfasst, wobei mindestens ein Behälterhandhabungsfahrzeug dazu ausgestaltet ist, auf dem Schienensystem (108) zu arbeiten, wobei das mindestens eine Behälterhandhabungsfahrzeug (201, 301, 401) mit mindestens einem Orientierungssensor, der zum Messen von mindestens einem Orientierungsparameter des Sensors in einem dreidimensionalen kartesischen Referenzsystem ausgestaltet ist, einer zentralen Steuereinheit, die dazu ausgestaltet ist, Datensignale des Behälterhandhabungsfahrzeugs zu empfangen, zu senden und zu verarbeiten und Datensignale des Sensors zu empfangen und zu verarbeiten, versehen ist, wobei mindestens ein Behälter (1, 106) aus vier Seitenwänden und einem Boden besteht, die eine offene Kastenstruktur erzeugen, und ein Mittel zum Transportieren des Behälters zu einer Entladestation zum Entleeren des Inhalts des Behälters durch Schwerkraft, wobei die Entladestation eine Behälterdrehvorrichtung umfasst, die dazu ausgestaltet ist, den Behälter um mindestens eine Achse zu drehen, wodurch die erforderliche Menge an Inhalt entleert wird, **dadurch gekennzeichnet, dass** die Behälterdrehvorrichtung eine Führungsfläche umfasst, die zum Führen des Behälters entlang einer spiralförmigen Bahn (A, C) ausgestaltet ist.

2. System nach Anspruch 1, wobei die Entladestation eine Öffnung (5) aufweist, damit der Inhalt des Behälters (1, 106) entleert werden kann.

3. System nach einem der vorhergehenden Ansprüche, wobei die Behälterdrehvorrichtung mindestens eine Schiene (4) umfasst, die eine Bahn (C) für den Behälter (1, 106) definiert und dazu ausgestaltet ist, ihn bei seiner Fahrt durch die Entladestation zu führen, und dazu ausgestaltet ist, den Behälter mindestens teilweise um die Achse zu drehen.

4. System nach einem der Ansprüche 1 - 2, wobei die Behälterdrehvorrichtung ein Rohr mit einem Tunnel (2) umfasst, der dazu ausgestaltet ist, den Behälter (1, 106) durch die Entladestation zu führen, sowie dazu ausgestaltet ist, den Behälter mindestens teilweise um die Achse zu drehen.

5. System nach einem der vorhergehenden Ansprüche, wobei das Mittel zum Transportieren des Behälters (1, 106) zu der Entladestation ein Förderband, Ketten mit Haken, Rollen, Rollenkugeln oder ein schwerkraftgetriebenes System oder einen den Behälter schiebenden mechanischen Arm umfasst.

6. System nach einem der vorhergehenden Ansprüche, wobei der Behälter (1, 106) aus mehreren Fächern besteht.

7. System nach Anspruch 6, wobei jedes Fach des Behälters (1, 106) einen eigenen Deckel aufweist.

8. System nach Anspruch 6, wenn er von Anspruch 2 abhängig ist, wobei jedes Fach des Behälters (1, 106) durch einen mit der Öffnung (5) in der Entladestation verbundenen Deckel abdeckbar ist.

9. System nach Anspruch 6, wobei jedes Fach des Behälters (1, 106) durch einen Deckel in einer Halterung abgedeckt werden kann.

10. System nach einem der Ansprüche 7 - 9, wobei jeder Deckel einzeln entriegelt werden kann, so dass nur der Inhalt eines Fachs mit einem entriegelten Deckel entleert werden kann.

11. System nach einem der vorhergehenden Ansprüche 7 - 10, wobei die Entladestation mit einer Messvorrichtung ausgestattet ist, mit der sie eine Verschlussvorrichtung in dem oder den Deckeln steuern kann, die die Menge des aus dem Behälter (1, 106) zu entladenden Inhalts steuert.

12. Verfahren zum Entladen des Inhalts eines Behälters (1, 106) unter Verwendung des Systems nach einem der vorhergehenden Ansprüche, wobei das Verfahren Folgendes umfasst:
• Abholen des Behälters aus einem automatisierten Ein- und Auslagersystem,
• Transportieren des Behälters zu einer Entladestation unter Verwendung eines Transportmittels,
• Drehen des Behälters mindestens teilweise um mindestens eine Achse unter Verwendung einer Behälterdrehvorrichtung der Entladestation, Entleeren der erforderlichen Inhaltsmenge, wobei die Behälterdrehvorrichtung eine Führungsfläche umfasst, die den Behälter entlang einer spiralförmigen Bahn (A, C) führt,
• Drehen des Behälters richtig herum und
• Transportieren des Behälters zurück zu dem automatisierten Ein- und Auslagersystem.

13. Verfahren nach Anspruch 12, wobei der Transport des Behälters (1, 106) zu der Entladestation unter Verwendung eines Förderbands, von Ketten mit Haken, von Rollen, von Rollenkugeln oder eines schwerkraftgetriebenen Systems erfolgt.

## Revendications

1. Système de déchargement d'un récipient de son contenu, comprenant un système automatisé de stockage et de récupération, le système comprenant un système de rails (108) comprenant un premier ensemble de rails parallèles (110) disposés pour guider le déplacement d'un véhicule de manutention de récipient (201, 301, 401) dans une première direction (X) en travers de la partie supérieure d'une structure de cadre (100), et un second ensemble de rails parallèles (111) disposés perpendiculairement au premier ensemble de rails pour guider le déplacement du véhicule de manutention de récipient dans une seconde direction (Y) qui est perpendiculaire à la première direction (X), les premier et second ensembles de rails parallèles divisant le système de rails en une pluralité de cellules de grille, la structure de cadre comprenant des éléments verticaux (102) et des éléments horizontaux, au moins un véhicule de manutention de récipient conçu pour fonctionner sur le système de rails (108), l'au moins un véhicule de manutention de récipient (201,301,401) étant pourvu d'au moins un capteur d'orientation conçu pour mesurer au moins un paramètre d'orientation du capteur dans un système de référence cartésien tridimensionnel, d'une unité centrale de commande conçue pour recevoir, transmettre et traiter des signaux de données du véhicule de manutention de récipient et pour recevoir et traiter des signaux de données du capteur, d'au moins un récipient (1, 106) composé de quatre parois latérales et d'une partie inférieure créant une structure de boîte ouverte, d'un moyen pour transporter le récipient vers un poste de déchargement pour vider le contenu du récipient par gravité, le poste de déchargement comprenant un dispositif de rotation de récipient conçu pour faire tourner le récipient autour d'au moins un axe, vidant ainsi la quantité requise de contenu, **caractérisé en ce que** le dispositif de rotation de récipient comprend une surface de guidage conçue pour guider le récipient le long d'un trajet hélicoïdal (A, C).

2. Système selon la revendication 1, le poste de déchargement comportant une ouverture (5) pour permettre au contenu du récipient (1, 106) d'être vidé.

3. Système selon l'une quelconque des revendications précédentes, le dispositif de rotation de récipient comprenant au moins un rail (4) qui définit un trajet (C) pour le récipient (1, 106) et est conçu pour le guider lorsqu'il se déplace à travers le poste de déchargement et est conçu pour faire tourner le récipient au moins partiellement autour dudit axe.

4. Système selon l'une quelconque des revendications 1 à 2, le dispositif de rotation de récipient comprenant un tube avec un tunnel (2) qui est conçu pour guider le récipient (1, 106) à travers le poste de déchargement et qui est conçu pour faire tourner le récipient au moins partiellement autour dudit axe.

5. Système selon l'une quelconque des revendications précédentes, le moyen pour transporter le récipient (1, 106) jusqu'au poste de déchargement comprenant une bande transporteuse, des chaînes avec des crochets, des rouleaux, des billes à rouleaux ou un système entraîné par gravité ou un bras mécanique poussant le récipient.

6. Système selon l'une quelconque des revendications précédentes, le récipient (1, 106) étant composé de plusieurs compartiments.

7. Système selon la revendication 6, chaque compartiment du récipient (1, 106) comportant son propre couvercle.

8. Système selon la revendication 6 lorsqu'elle dépend de la revendication 2, chaque compartiment du récipient (1, 106) pouvant être recouvert par un couvercle relié à l'ouverture (5) du poste de déchargement.

9. Système selon la revendication 6, chaque compartiment du récipient (1, 106) pouvant être couvert par un couvercle dans un berceau.

10. Système selon l'une quelconque des revendications 7 à 9, chaque couvercle pouvant être déverrouillé individuellement en permettant uniquement au contenu d'un compartiment doté d'un couvercle déverrouillé d'être vidé.

11. Système selon l'une quelconque des revendications précédentes 7 à 10, le poste de déchargement étant équipé d'un dispositif de mesure lui permettant de commander un dispositif obturateur dans le(s) couvercle(s) commandant la quantité de contenu à décharger du récipient (1, 106).

12. Procédé de déchargement d'un récipient (1, 106) de son contenu à l'aide du système selon l'une quelconque des revendications précédentes, le procédé comprenant :
• la collecte du récipient depuis un système automatisé de stockage et de récupération ;
• le transport du récipient jusqu'à un poste de déchargement à l'aide d'un moyen de transport ;
• la rotation du récipient au moins partiellement autour d'au moins un axe à l'aide d'un dispositif de rotation de récipient du poste de déchargement, le vidage de la quantité requise de contenu, le dispositif de rotation de récipient comprenant une surface de guidage qui guide le récipient suivant un trajet hélicoïdal (A, C) ;
• la rotation du récipient dans le bon sens vers le haut ; et
• le transport du récipient de retour vers le système automatisé de stockage et de récupération.

13. Procédé selon la revendication 12, le transport du récipient (1, 106) jusqu'au poste de déchargement se faisant à l'aide d'une courroie transporteuse, de chaînes à crochets, à rouleaux, à billes ou d'un système entraîné par gravité.
